# EUROPÄISCHE PATENTSCHRIFT

(11) **EP 3 847 679 B1**
(45) Veröffentlichungstag und Bekanntmachung des Hinweises auf die Patenterteilung: **27.12.2023**
(21) Anmeldenummer: 19795093.4
(22) Anmeldetag: 15.10.2019
(51) Int. Cl.: H01F 6/06

(54) **VERFAHREN ZUR ELEKTRISCHEN KONTAKTIERUNG EINES SUPRALEITENDEN BANDLEITERS**
METHOD FOR MAKING ELECTRICAL CONTACT WITH A SUPERCONDUCTIVE STRIP CONDUCTOR
PROCÉDÉ POUR LE CONTACT ÉLECTRIQUE D'UN CONDUCTEUR PLAT SUPRACONDUCTEUR

(30) Priorität: 15.10.2018 DE 102018217612
(43) Veröffentlichungstag der Anmeldung: 14.07.2021
(73) Patentinhaber: Siemens Energy Global GmbH & Co. KG, 81739 München (DE)
(72) Erfinder: BATZ, Otto, 91359 Leutenbach (DE); FRANK, Michael, 91080 Uttenreuth (DE); KUMMETH, Peter, 91074 Herzogenaurach (DE); OOMEN, Marijn Pieter, 91056 Erlangen (DE)
(86) Internationale Anmeldenummer: PCT/EP2019/077835
(87) Internationale Veröffentlichungsnummer: WO 2020/078937

(56) Entgegenhaltungen:
- EP-A2- 1 107 322
- WO-A1-2009/127956
- WO-A1-2015/049358
- WO-A2-2005/079220
- DE-A1-102013 212 042
- JP-A- 2013 235 699
- US-A- 5 134 040

## Beschreibung

Die vorliegende Erfindung betrifft ein Verfahren zur Ausbildung einer elektrischen Kontaktierung zwischen einem ersten supraleitenden Bandleiter und einem weiteren elektrischen Leiterelement, wobei zwischen einem Kontaktbereich des ersten supraleitenden Bandleiters und dem weiteren Leiterelement eine dauerhafte elektrisch leitende Verbindung ausgebildet wird. Weiterhin betrifft die Erfindung einen elektrischen Leiterverbund, in dem ein erster supraleitender Bandleiter und ein weiteres elektrisches Leiterelement auf eine derartige Weise dauerhaft elektrisch leitend verbunden sind.

Auf dem Gebiet der supraleitenden Maschinen und der supraleitenden Magnetspulen sind Spuleneinrichtungen bekannt, bei denen supraleitende Bandleiter in Spulenwicklungen gewickelt werden. Häufig sind dies Hochtemperatursupraleiter (HTS), also supraleitende Materialien mit einer Sprungtemperatur oberhalb von 25 K und bei einigen Materialklassen oberhalb von 77 K. Diese Hochtemperatursupraleiter liegen typischerweise in Form von flachen Bandleitern vor, die ein bandförmiges Substratband und eine auf dem Substratband angeordnete Supraleiterschicht aufweisen. Zusätzlich weisen die Bandleiter oft noch weitere Schichten wie Stabilisierungsschichten, Kontaktschichten, Pufferschichten und in manchen Fällen auch Isolationsschichten auf. Die wichtigste Materialklasse der sogenannten HTS-Leiter zweiter Generation (2G-HTS) sind Verbindungen des Typs REBa₂Cu₃Oₓ, wobei RE für ein Element der seltenen Erden oder eine Mischung solcher Elemente steht.

Das Substratband besteht typischerweise entweder aus Stahl, einer Nickel-Wolfram-Legierung oder aus der Legierung Hastelloy. Der elektrische Kontakt zu einem äußeren Stromkreis wird meist über eine normalleitende Deckschicht oder Stabilisierungsschicht aus Kupfer oder Silber hergestellt, wobei diese normalleitende Schicht entweder einseitig über der Supraleitungsschicht aufgebracht wird oder als umhüllende Schicht den gesamten Bandleiter umgeben kann. Zur Herstellung des elektrischen Kontakts wird die am weitesten außen liegende normalleitende Schicht typischerweise durch einen Lötprozess mit einem Kontaktstück aus Kupfer verbunden, wobei dieses Kontaktstück beim Betrieb mit weiteren Elementen des äußeren Stromkreises in elektrisch leitender Verbindung steht. Typischerweise liegen für jede solche Spuleneinrichtung zwei derartige Lötkontakte zur Verbindung mit entsprechenden Kontaktstücken vor, so dass die gesamte Spulenwicklung über zwei Endbereiche in einen Stromkreis eingebunden werden kann und beispielsweise so an eine äußere Stromquelle angeschlossen werden kann.

In manchen supraleitenden Spuleneinrichtungen werden jedoch nicht nur elektrische Kontakte zu normalleitenden Kontaktstücken, sondern auch elektrische Kontakte zwischen einzelnen Teilstücken des supraleitenden Bandleiters benötigt. Dies kann aus verschiedenen Gründen wünschenswert sein: Beispielsweise kann die Gesamtlänge des für eine Spulenwicklung benötigten Bandleiters größer sein als die Länge, die an einem Stück hergestellt werden kann. Dann müssen mehrere Teilstücke des Bandleiters für einen übergeordneten Gesamtleiter der Spulenwicklung verbunden werden. Alternativ kann es auch zweckmäßig sein, die Orientierung des Bandleiters innerhalb der Spulenwicklung zu wenden. Dies ist beispielsweise dann sinnvoll, wenn der Bandleiter eine bevorzugte Seite für die Kontaktierung mit einem normalleitenden Kontaktstück aufweist. In einem solchen Fall kann es sinnvoll sein, einen zusätzlichen inneren Wicklungskontakt zwischen zwei Bandleiter-Teilen vorzusehen, damit sowohl auf einer radial innenliegenden Seite als auch auf einer radial außenliegenden Seite der Spule die bevorzugte Kontaktfläche frei zugänglich ist. Ein solcher innerer Wicklungskontakt ist beispielsweise in der DE 102012223366 A1 beschrieben. Ein weiterer Grund für die Kontaktierung mehrerer Bandleiter-Teile kann darin liegen, dass eine Spule mit einem geringen Platzbedarf an den Kopfseiten der Spule hergestellt werden soll und dass daher in einem räumlich engen Bereich eine 90°-Wende innerhalb der Ebene des Bandleiters erreicht werden soll. Dies kann besonders platzsparend über eine Kontaktierung von mehreren entsprechend positionieren Teilleitern des Bandleiters erreicht werden, wie in der noch nicht offengelegten deutschen Patentanmeldung mit dem Aktenzeichen 102018203139.8 beschrieben. Schließlich kann ein weiterer Grund für eine Kontaktierung von zwei Enden desselben Bandleiters darin liegen, dass eine ringförmig geschlossene Leiterschleife zur Ausbildung eines Dauerstroms oder zumindest eines Pseudo-Dauerstroms ausgebildet werden soll.

Sowohl die Kontaktierung eines supraleitenden Bandleiters mit einem normalleitenden Kontaktstück als auch die Kontaktierung mit einem weiteren Bandleiter wird nach dem Stand der Technik häufig mit einer herkömmlichen Lötverbindung geschaffen. Eine solche herkömmliche Lötverbindung wird dadurch erzeugt, dass die beiden zu verbindenden Elemente sowie eine dazwischen aufgebrachte vergleichsweise niedrigschmelzende Lotschicht zusammen auf eine Temperatur oberhalb des Schmelzpunkts des Lotmaterials erhitzt werden. Nachteilig bei der elektrischen Kontaktierung eines supraleitenden Bandleiters mit einer solchen herkömmlichen Lötverbindung ist, dass die hochtemperatursupraleitenden Schichten der gewickelten Bandleiter sehr empfindlich gegenüber thermischer Schädigung und insbesondere gegenüber einer Delamination sind. Bei einer mechanischen oder thermischen Belastung des Schichtstapels des Bandleiters tritt sehr leicht eine Delamination auf, was die supraleitenden Eigenschaften unmittelbar beeinträchtigt und sogar zu einer Zerstörung des Bandleiters führen kann. Diese Gefahr der Delamination der supraleitenden Schicht und/oder der normalleitenden Deckschicht ist sowohl während des Herstellens des Lötkontakts durch die hierbei vorgenommene Erwärmung gegeben als auch bei der Abkühlung und beim Betrieb der durch Löten kontaktierten Spulenwicklung gegeben. Der Bandleiter der Spulenwicklung wird beim Löten zumindest im Bereich der Kontaktstelle auf seiner ganzen Dicke auf eine Temperatur von typischerweise mindestens 130 °C bis 180 °C gebracht. Dies liegt sehr nah bei der thermischen Belastungsgrenze von üblichen Bandleitern, die meist in der Nähe von 200°C liegt. Bei der nachträglichen elektrischen Kontaktierung einer bereits mit Vergussmasse vergossenen Spulenwicklung kann auch die Vergussmasse durch den Lötprozess beim Kontaktieren thermisch geschädigt werden.

Eine weitere aus dem Stand der Technik bekannte Methode zur Kontaktierung von supraleitenden Bandleitern besteht darin, eine Pressverbindung zwischen dem Bandleiter und dem weiteren elektrischen Leiterelement auszubilden. Bei einer solchen Pressverbindung werden die zu verbindenden Elemente mechanisch fest aneinandergedrückt, beispielsweise durch eine feste Verschraubung beziehungsweise Klemmung. Hierbei kann zur Verbesserung des elektrischen Kontakts beispielsweise noch eine leicht verformbar und elektrisch leitfähige Indiumfolie zwischen die zu verbindenden Elemente eingelegt werden. Eine solche Pressverbindung weist aber den Nachteil auf, dass hierfür relativ viel zusätzlicher Bauraum benötigt wird und die mechanischen Elemente der Klemmvorrichtung beziehungsweise Schraubvorrichtung ebenfalls einen zusätzlichen Beitrag zum Gewicht der Spuleneinrichtung leisten. Bei Anwendungen, die gewichtskritisch sind oder bei denen der supraleitende Bandleiter hohen Beschleunigungen ausgesetzt ist, sind diese zusätzlichen mechanischen Elemente unerwünscht.

Die Dokumente WO2015/049358A1, WO2009/127956A1, DE10 2013 212042A1, WO2005/079220A2, EP 1 107 322 A2, US 5 134 040 A und JP 2013 235699A betreffen generell Verfahren zur Ausbildung einer elektrischen Kontaktierung zwischen einem supraleitenden Bandleiter und einem weiteren elektrischen Leiterelement.

Aufgabe der Erfindung ist es, ein Verfahren zur Ausbildung einer elektrischen Kontaktierung eines supraleitenden Bandleiters anzugeben, welches die genannten Nachteile überwindet. Insbesondere soll ein Kontaktierungsverfahren zur Verfügung gestellt werden, welches bei geringem Platz- und Volumenbedarf eine Kontaktierung mit einer geringen Gefahr einer Beschädigung des supraleitenden Bandleiters ermöglicht. Eine weitere Aufgabe ist es, einen elektrischen Leiterverbund mit einem derart kontaktierten supraleitende Bandleiter zur Verfügung zu stellen.

Diese Aufgaben werden durch das in Anspruch 1 beschriebene Verfahren und den in Anspruch 14 beschriebenen Leiterverbund gelöst.

Das erfindungsgemäße Verfahren dient zur Ausbildung einer elektrischen Kontaktierung zwischen einem ersten supraleitenden Bandleiter und einem weiteren elektrischen Leiterelement. Dabei wird der erste supraleitende Bandleiter in einem Kontaktbereich des Bandleiters in flächigen Kontakt mit einer ersten Hauptfläche einer reaktiven Multischichtfolie gebracht. Weiterhin wird die von der ersten Hauptfläche abgewandte zweite Hauptfläche der reaktiven Multischichtfolie in flächigen Kontakt mit dem weiteren elektrischen Leiterelement gebracht. Anschließend wird durch ein Zünden einer exothermen chemischen Reaktion in der Multischichtfolie eine dauerhafte elektrisch leitende Verbindung zwischen dem ersten supraleitenden Bandleiter und dem weiteren elektrischen Leiterelement gebildet.

Die beiden erstgenannten Schritte, also das Aneinanderlegen von Bandleiter und Multischichtfolie sowie das Aneinanderlegen von Multischichtfolie und dem weiteren Leiterelement, können dabei grundsätzlich in beliebiger Reihenfolge oder auch gleichzeitig erfolgen. Der letztgenannte Schritt, also das Zünden der Multischichtfolie, soll dann im Anschluss an die beiden vorgenannten Schritte erfolgen - also nachdem die Multischichtfolie zwischen dem Bandleiter und dem weiteren Leiterelement positioniert wurde.

Unter der genannten reaktiven Multischichtfolie soll eine solche Folie verstanden werden, die aus einem Schichtstapel von einer Mehrzahl von Teilschichten gebildet ist. Sie soll "reaktiv" sein in dem Sinne, dass nach einer Aktivierung der Folie eine exotherme chemische Reaktion innerhalb der Folie ablaufen kann, welche nach dem Zünden selbständig weiterläuft. Die exotherme chemische Reaktion pflanzt sich also insbesondere von einem Teilbereich der Folie, in dem sie gezündet wurde, in die übrigen Bereiche der Folie fort. Diese Fortpflanzung entsteht dadurch, dass die Reaktionswärme der exothermen chemischen Reaktion aus einem bereits reagierten Bereich die nötige Aktivierungsenergie für die angrenzenden, noch nicht reagierten Bereiche der Folie liefert. Insbesondere sind die einzelnen Teilschichten der Multischichtfolie aus wenigstens zwei unterschiedlichen Materialien gebildet. Dabei liegen die unterschiedlichen Materialien in jeweils miteinander abwechselnden Teilschichten des Schichtstapels vor. Die wenigstens zwei unterschiedlichen Materialien der Teilschichten bilden insbesondere zwei verschiedene Reagenzien (also Edukte) für die exotherme chemische Reaktion. Die einzelnen Teilschichten der Multischichtfolie sind dabei insbesondere jeweils vergleichsweise dünn ausgebildet, sodass sich ein geringer räumlicher Abstand der an der exothermen Reaktion beteiligten Edukte ergibt. Dieser geringe räumliche Abstand erleichtert sowohl das Zünden als auch das Fortpflanzen der exothermen Reaktion. Die bei der exothermen Reaktion erzeugte thermische Energie wird dann erfindungsgemäß als Prozesswärme genutzt, um die dauerhafte elektrische Verbindung zwischen den genannten Elementen auszubilden. Beispielsweise kann eine solche Verbindung durch einen Lötprozess hergestellt werden, bei dem die Energie der exothermen Reaktion zum Erhitzen des Lots verwendet wird. Das Lot kann dabei aus den Materialien der Multischichtfolie und/oder aus einem anderen Material gebildet sein. Das Verbindungs-Verfahren soll allerdings nicht auf ein Lötverfahren beschränkt sein. Es können auch andere Arten der Ausbildung einer dauerhaften elektrisch leitfähigen Verbindung in Frage kommen, bei denen zur Herstellung der Verbindung ein Erwärmungsschritt benötigt wird, beispielsweise auch Schweißen oder Heißkleben mit einem elektrisch leitfähigen Klebemittel.

Ein wesentlicher Vorteil des erfindungsgemäßen Verfahrens im Vergleich zu herkömmlichen Lötverfahren ist, dass der zu kontaktierende supraleitende Bandleiter während des Kontaktierungsverfahrens nicht stark erhitzt werden muss. Dies wird dadurch erreicht, dass die zwischen dem Bandleiter und dem weiteren Leiterelement eingelegte Folie aufgrund der in ihr ausgelösten exothermen chemischen Reaktion als eng begrenzte lokale Wärmequelle für den Verbindungsprozess dient. Hierdurch wird eine ausreichend starke lokale Erwärmung herbeigeführt, um die dauerhafte elektrische Verbindung (beispielsweise durch lokales Löten) auszubilden. Dadurch, dass die Folie im Vergleich zu dem Bandleiter und dem weiteren Leiterelement vergleichsweise dünn ausgebildet ist, ist der Energieeintrag bei der exotherme Reaktion so begrenzt, dass die Erwärmung sich auf einen eng begrenzten räumlichen Bereich in direkter Nachbarschaft der Folie konzentriert. Eine starke Erwärmung der supraleitenden Schicht des Bandleiters wird dabei vorteilhaft vermieden. Durch das Zünden der exothermen chemischen Reaktion wird zwar innerhalb der Folie und in den direkt an die Folie angrenzenden Schichten eine sehr hohe Temperatur erzeugt. Aufgrund der vergleichsweise geringen freigesetzten Energiemenge und der vergleichsweise hohen Wärmekapazitäten von dem benachbarten Bandleiter und dem benachbarten weiteren Leiterelement wird nur der direkt an die Folie angrenzende Bereich und auch dieser nur sehr kurzzeitig erwärmt. Die übrigen Bereiche von Bandleiter und weiterem Leiterelement werden nicht der hohen Reaktionstemperatur ausgesetzt und verbleiben auf einem vergleichsweise niedrigen Temperaturniveau in der Nähe der Raumtemperatur. Der kurzzeitige Hitzepuls im Bereich der reaktiven Folie und der unmittelbar daran angrenzenden Oberflächen reicht dabei trotzdem aus, um das Material der Folie und/oder der daran angrenzenden Oberflächen stark zu erwärmen und insbesondere aufzuschmelzen und dadurch eine dauerhafte, flächige elektrisch leitfähige Verbindung auszubilden.

Mit der hohen, aber räumlich sehr eng begrenzten Erhitzung im Bereich der Folie ist der zusätzliche Vorteil verbunden, dass insgesamt ein Leiterverbund hergestellt werden kann, in dem unterschiedliche Materialien mit deutlich verschiedenen thermischen Ausdehnungskoeffizienten vorliegen. Beispielsweise können innerhalb des supraleitenden Bandleiters Teilschichten mit stark unterschiedlichen Ausdehnungskoeffizienten vorliegen. Dadurch, dass eine starke Erwärmung nur an der äußersten Oberfläche stattfindet und im weiter innenliegenden Schichtsystem und auf der von dem Kontaktbereich abgewandten Seite des Bandleiters vermieden wird, werden starke thermische Spannungen im Schichtsystem während der Ausbildung des Kontakts vorteilhaft vermieden.

Der erfindungsgemäße elektrische Leiterverbund weist wenigstens einen ersten supraleitenden Bandleiter und wenigstens ein weiteres elektrisches Leiterelement auf. Dabei ist in einem Kontaktbereich zwischen dem ersten supraleitenden Bandleiter und dem weiteren elektrischen Leiterelement eine dauerhafte elektrisch leitende Verbindung hergestellt, welche durch Zünden einer exothermen chemischen Reaktion in einer Multischichtfolie ausgebildet ist. Die Vorteile des erfindungsgemäßen Leiterverbundes ergeben sich analog zu den weiter oben beschriebenen Vorteilen des erfindungsgemäßen Verfahrens. Die Verwendung einer reaktiven Multischichtfolie zur Erzeugung der bei der Kontaktierung benötigten Wärmemenge ist in dem derart ausgebildeten Leiterverbund daran erkennbar, dass die Edukt-Materialien aus der Multischichtfolie als Materialbestandteile einer in einem Kontaktbereich ausgebildeten Verbindungsschicht vorliegen. Hierbei können die Edukt-Materialien beispielsweise zusammen den Hauptbestandteil der Verbindungsschicht ausmachen oder aber sie können als Nebenbestandteil neben einem anderen wesentlichen Material der Verbindungsschicht (beispielsweise einem Lotmaterial und/oder Kupfer) vorliegen. In diesem Fall können die Edukt-Materialien der Multischichtfolie und die optionalen weiteren Materialien insbesondere zusammen eine intermetallische Verbindung ausbilden, wenn es sich bei den Edukt-Materialien und dem Lotmaterial jeweils um Metalle bzw. metallische Legierungen handelt.

Eine Unterscheidung eines auf die beschriebene Weise hergestellten elektrischen Leiterverbunds von einem herkömmlich gelöteten Leiterverbund ist zusätzlich auch dadurch möglich, dass die den dauerhaften Kontakt ausbildende Verbindungsschicht erkennbar durch einen Schmelzprozess gebildet wurde und dass die hierfür benötigte Schmelztemperatur deutlich oberhalb der Temperatur liegt, bei der der erste supraleitende Bandleiter eine irreversible Schädigung erleiden würde. Wenn der supraleitende Bandleiter eine solche irreversible Schädigung nicht zeigt, folgt aus den oben angegebenen Merkmalen, dass die hier miteinander verbundenen elektrischen Elemente nicht wie beim herkömmlichen Lötprozess im Ganzen auf die nötige Prozesstemperatur erhitzt worden sein können.

Vorteilhafte Ausgestaltungen und Weiterbildungen der Erfindung gehen aus den von den Ansprüchen 1 und 14 abhängigen Ansprüchen sowie der folgenden Beschreibung hervor. Dabei können die beschriebenen Ausgestaltungen des Verfahrens und des Leiterverbundes allgemein vorteilhaft miteinander kombiniert werden.

So kann die gebildete dauerhaft elektrisch leitende Verbindung vorteilhaft eine Lötverbindung zwischen dem ersten supraleitenden Bandleiter und dem weiteren elektrischen Leiterelement sein. Die mittels der exothermen chemischen Reaktion der Multischichtfolie freigesetzte Wärmemenge kann also besonders vorteilhaft zum Aufschmelzen eines Lotmaterials eingesetzt werden, wodurch eine dauerhafte elektrisch leitende Verbindung gebildet wird. Gemäß einer ersten Ausführungsvariante kann das Lotmaterial im Wesentlichen aus den Edukt-Materialien der Multischichtfolie selbst gebildet sein. Alternativ oder zusätzlich kann das Lotmaterial aber auch das Material von einer oder mehreren weiteren Lotschichten enthalten, welche beispielsweise auf die entsprechenden, im Kontaktbereich liegenden Oberflächen des ersten supraleitenden Bandleiters beziehungsweise des weiteren elektrischen Leiterelements aufgebracht sein können.

Die gebildete Lötverbindung kann also vorteilhaft durch eine Verbindungsschicht ausgebildet werden, welche mehrheitlich aus den Materialien der reaktiven Multischichtfolie gebildet ist. Unter dem Begriff "mehrheitlich" soll hier verstanden werden, dass wenigstens 50 Volumenprozent der gebildeten Verbindungsschicht aus den Edukt-Materialien der Multischichtfolie hervorgehen.

Allgemein und unabhängig von den genauen Materialanteilen der Verbindungsschicht kann diese Verbindungsschicht aus einem Material gebildet sein, welches eine intermetallische Verbindung aus den Edukt-Materialien der Multischichtfolie und optional zusätzlich aus einem oder mehreren weiteren metallischen Materialien der angrenzenden Oberflächen von dem ersten supraleitenden Bandleiter und/oder dem weiteren elektrischen Leiterelement ist. Bei einem derartigen weiteren metallischen Material kann es sich insbesondere vorteilhaft um Kupfer handeln. Die Reaktionstemperatur der exothermen chemischen Reaktion kann insbesondere ausreichend hoch sein, um eine der Folie benachbarte Kupferschicht aufzuschmelzen. Dieses Kupfer kann dann eine intermetallische Verbindung mit den Edukt-Materialien der Multischichtfolie eingehen. Eine solche Kupferschicht oder kupferhaltige Schicht kann beispielsweise auf einer außenliegenden Seite des supraleitenden Bandleiters vorliegen. Alternativ oder zusätzlich kann eine solche Kupferschicht oder kupferhaltige Schicht auf einer äußeren Oberfläche des weiteren elektrischen Leiterelements vorliegen. Besonders vorteilhaft kann das weitere elektrische Leiterelement im Wesentlichen aus Kupfer beziehungsweise einer kupferhaltigen Legierung gebildet sein.

Allgemein kann die Lötverbindung durch eine Verbindungsschicht ausgebildet werden, welche die Materialien der reaktiven Multischichtfolie und zusätzlich das Material von wenigstens einer weiteren Lotschicht aufweist. Optional kann die Verbindungsschicht zusätzlich weitere Materialbestandteile aufweisen, beispielsweise das oben beschriebene Kupfer beziehungsweise kupferhaltige Material aus den angrenzenden Schichten des supraleitenden Bandleiters beziehungsweise des Weiteren Leiterelements. Unter der beschriebenen "weiteren Lotschicht" soll insbesondere eine Schicht verstanden werden, welche vor der Zündung der Folie im Kontaktbereich auf einer Oberfläche des supraleitenden Bandleiters und/oder des Weiteren Leiterelements vorliegt. Sie ist vorteilhaft aus einem vergleichsweise niedrig schmelzenden Material gebildet. Es können auch unterschiedliche Lotschichten (insbesondere aus unterschiedlichen Lotmaterialien) auf dem supraleitenden Bandleiter und dem weiteren Leiterelement vorliegen. Insbesondere soll die wenigstens eine weitere Lotschicht aus einem Material gebildet sein, welches einen niedrigeren Schmelzpunkt aufweist als Kupfer. Besonders vorteilhaft ist die weitere Lotschicht aus einem Material gebildet, welches einen Schmelzpunkt unterhalb von 400 °C aufweist. Besonders vorteilhaft kann ein solches Material eine zinnhaltige Lotlegierung sein. Wenn die zur Aufschmelzung eines solchen Lotmaterials benötigte Wärme durch die Reaktionswärme der exothermen Reaktion der Folie gebildet wird, kommt es besonders leicht zu einer Vermischung von dem Lotmaterial und den Materialien der Folie. In der Verbindungsschicht liegt dann also ein entsprechendes Materialgemisch und/oder eine aus den genannten Materialien gebildete Verbindung vor. Dies kann insbesondere eine elektrisch leitfähige intermetallische Verbindung sein.

Erfindungsgemäß werden der erste supraleitende Bandleiter und das weitere elektrische Leiterelement während der Zündung der exothermen chemischen Reaktion gegeneinandergepresst. Ein solches Anpressen ist besonders vorteilhaft, um eine möglichst stabile und niederohmige elektrisch leitfähige Verbindung zwischen den genannten Elementen auszubilden. Der verwendete Anpressdruck kann beispielsweise im Bereich zwischen 0,2 N/mm² und 5 N/mm², insbesondere in der Nähe von 1 N/mm², liegen.

Gemäß einer vorteilhaften Ausführungsvariante des Verfahrens kann es sich bei dem weiteren elektrischen Leiterelement um einen zweiten supraleitenden Bandleiter handeln. Mit anderen Worten kann das erfindungsgemäße Verfahren dazu genutzt werden, um zwei supraleitende Bandleiter flächig miteinander zu kontaktieren. Ein derart ausgebildeter elektrischer Leiterverbund kann insbesondere aus den eingangs genannten Gründen in einer supraleitenden elektrischen Spulenwicklung mit mehreren supraleitenden Teilleitern zum Einsatz kommen. Bei dem zweiten supraleitenden Bandleiter kann es sich alternativ aber auch um ein Leiterelement einer supraleitenden Stromzuführung für eine supraleitende Spule handeln. Durch die allgemeinen Vorteile des erfindungsgemäßen Verfahrens werden die beiden miteinander verbundenen supraleitenden Bandleiter vor einer thermischen Schädigung beim Verbindungsprozess geschützt. Trotzdem können im Kontaktbereich während der exothermen Reaktion der Folie und damit während der Ausbildung der Verbindungsschicht sehr hohe Temperaturen vorliegen.

Gemäß einer alternativen Ausführungsvariante des Verfahrens kann es sich bei dem weiteren elektrischen Leiterelement aber auch um ein normalleitendes Kontaktstück handeln. Ein solches normalleitendes Kontaktstück kann insbesondere zur Verbindung einer aus dem ersten supraleitenden Bandleiter gebildeten Spulenwicklung mit einem äußeren Stromkreis vorgesehen sein. Das normalleitende Kontaktstück kann besonders vorteilhaft im Wesentlichen aus Kupfer bestehen beziehungsweise im Wesentlichen aus einer kupferhaltigen Legierung bestehen. Hierdurch kann insgesamt eine vergleichsweise niederohmige Kontaktierung erreicht werden. Das normalleitende Kontaktstück kann insbesondere in einem Endbereich einer aus dem supraleitenden Bandleiter gebildeten Spulenwicklung vorgesehen sein. Bei einem solchen Endbereich kann es sich beispielsweise um einen radial innenliegenden Endbereich der Spule oder um einen radial außen liegenden Endbereich der Spule handeln.

Allgemein vorteilhaft kann die Zündung der exothermen chemischen Reaktion durch einen elektrischen Zündpuls, durch einen optischen Zündpuls und/oder durch einen thermischen Zündpuls ausgelöst werden. Beispielsweise kann ein elektrischer Zündpuls durch ein kurzfristiges Anlegen einer elektrischen Spannung in einem Teilbereich der Folie erreicht werden. Ein optischer und/oder thermischer Zündpuls kann beispielsweise durch kurzfristiges Einwirken eines Lasers in einem Teilbereich der Folie erreicht werden. Die genannten vorteilhaften Ausgestaltungen der Zündung sind allesamt geeignet, um durch die Freisetzung einer initialen Energiemenge eine chemische Reaktion in der Folie auszulösen. Von dem Teilbereich der Folie aus, in dem der Zündpuls aufgenommen wird, kann sich die chemische Reaktion dann auf die beschriebene Weise selbständig fortpflanzen.

Gemäß einer vorteilhaften Ausführungsform des Verfahrens kann durch die Zündung der exothermen chemischen Reaktion eine Reaktionstemperatur ausgebildet werden, die im Bereich zwischen 1000 °C und 2000 °C liegt. Derart hohe Reaktionstemperaturen können mit heutzutage verfügbaren Multischichtfolien in der räumlich begrenzten Umgebung der Folie leicht erreicht werden. Besonders vorteilhaft liegt die Reaktionstemperatur in einem Bereich zwischen 1200 °C und 1800 °C, ganz besonders bevorzugt in einem Bereich zwischen 1500 °C und 1800 °C. Mit derart hohen Reaktionstemperaturen kann insbesondere nicht nur ein schnelles Aufschmelzen von ein oder mehreren der Folie benachbarten niedrigschmelzenden Lotschichten erfolgen, sondern es kann sogar eine auf der benachbarten Oberfläche von dem supraleitenden Bandleiter und oder dem weiteren Leiterelement vorliegende kupferhaltige Schicht angeschmolzen werden.

Ein wesentlicher Vorteil der Verwendung der beschriebenen Multischichtfolie als Wärmequelle liegt darin, dass im Bereich der zu bildenden Verbindungsschicht eine sehr hohe Temperatur erreicht wird, dass aber trotzdem im Bereich des Supraleitermaterials des Bandleiters keine besonders hohe Temperatur erreicht wird. Dies wird allgemein insbesondere dadurch erreicht, dass das Supraleitermaterial des Bandleiters nicht im Bereich seiner Außenfläche, sondern innenliegend vorliegt. Das Supraleitermaterial des Bandleiters kann insbesondere während des gesamten Kontaktierungsverfahrens auf einer Temperatur unterhalb von 200 °C verbleiben. Auf diese Weise kann die thermische Belastungsgrenze der supraleitenden Schicht des Bandleiters unterschritten werden. Besonders vorteilhaft kann diese thermische Belastungsgrenze sogar deutlich unterschritten werden, indem beispielsweise das Supraleitermaterial dauerhaft unter einer Temperatur von 100 °C verbleibt.

Im Zusammenhang mit der vorliegenden Erfindung ist es überraschend, dass die Prozesstemperatur zur Ausbildung der elektrischen Verbindung derart hoch gewählt werden kann, obwohl die Prozesstemperatur so weit oberhalb der Schädigungsgrenze von typischen Supraleitermaterialien liegt. Dies wird einerseits durch die vergleichsweise geringe Energiemenge erreicht, die innerhalb der reagierenden Folie nur sehr lokal freigesetzt wird. Die enge lokale Begrenzung der kurzzeitig vorliegenden sehr hohen Temperatur wird auch durch die hohe Reaktionsgeschwindigkeit und insbesondere die Fortpflanzungsgeschwindigkeit der Reaktion innerhalb der Folie begünstigt. So kann die laterale Fortpflanzungsgeschwindigkeit der exothermen Reaktion innerhalb der reaktiven Folie beispielsweise allgemein im Bereich zwischen 5 m/s und 100 m/s, insbesondere zwischen 5 m/s und 30 m/s liegen. Durch die derart hohe Fortpflanzungsgeschwindigkeit wird erreicht, dass die hohe Reaktionstemperatur an einem gegebenen Punkt der Folie nur äußerst kurzzeitig vorliegt. Die Energiemenge und die Dauer der Temperatureinwirkung sind zu kurz, als dass eine entsprechende Temperaturerhöhung bis zu der weiter innen liegenden supraleitenden Schicht des Bandleiters vordringen könnte.

Überraschenderweise hat sich gezeigt, dass eine thermische Schädigung einer supraleitenden Schicht des Bandleiters selbst dann vermieden werden kann, wenn die supraleitende Schicht während der Reaktion weniger als 200 µm von der reaktiven Folie entfernt ist. Der Abstand zwischen der supraleitenden Schicht und der reaktiven Folie kann insbesondere im Bereich zwischen 10 µm und 200 µm, besonders vorteilhaft zwischen 20 µm und 100 µm liegen.

Allgemein vorteilhaft kann das Material der reaktiven Multischichtfolie Aluminium und/oder Nickel umfassen. Besonders vorteilhaft liegt innerhalb der Folie eine Vielzahl von Schichten vor, welche abwechselnd mehrheitlich aus Aluminium und mehrheitlich aus Nickel gebildet sind. Eine solche Aluminium-Nickel-Multischichtfolie ist besonders geeignet, um durch eine stark exotherme Reaktion Nickelaluminid auszubilden. Das entstehende Nickelaluminid liegt während der Reaktion in geschmolzener Form vor, erstarrt aber bei Abkühlung auf Raumtemperatur zu einer festen elektrisch leitfähigen Schicht. Mit anderen Worten kann das entstehende Nickelaluminid hier selbst als Lotmaterial in der gebildeten Verbindungsschicht dienen. Optional kann sich das gebildete Nickelaluminid aber auch mit einem Material aus einer angrenzenden Oberfläche des Bandleiters und/oder des Weiteren Leiterelements mischen und/oder verbinden. Ein solches Material kann beispielsweise Kupfer, eine Kupferlegierung und/oder das Material einer zinnhaltigen Lotschicht sein.

Allgemein und unabhängig von der genauen Materialzusammensetzung kann die Multischichtfolie ein Schichtsystem mit einer alternierenden Abfolge von zwei Materialien bilden, wobei diese beiden Materialien miteinander eine exotherme chemische Reaktion eingehen können. Vorteilhaft ist dabei allgemein die Bildung eines elektrisch leitfähigen Reaktionsprodukts, um eine möglichst niederohmige Verbindungschicht zwischen den beiden elektrisch zu kontaktierenden Elementen auszubilden. Dies ist jedoch nicht zwingend notwendig: Wenn während der Kontaktierung metallische Oberflächen der zu kontaktierenden Elemente (und insbesondere auf solchen Oberflächen aufgebrachte Lotschichten) aufgeschmolzen oder angeschmolzen werden, kann auch dann eine insgesamt elektrisch leitfähige Verbindungsschicht ausgebildet werden, wenn diese mehrheitlich aus dem metallischen Material der Oberfläche besteht und nur als Nebenbestandteil ein elektrisch isolierendes Reaktionsprodukt der Multischichtfolie aufweist.

Neben der beschriebenen Nickel-Aluminium-Multischichtfolie sind auch andere Materialkombinationen bekannt, aus denen ebenfalls reaktive Multischichtfolien gebildet werden können. Beispielsweise kann eine solche Multischichtfolie auch wechselnde Schichten aus Aluminium und Titan, aus Titan und amorphem Silizium, aus Titan und Bor beziehungsweise aus Aluminium und Palladium aufweisen. Auch mit diesen Materialkombinationen ist die kurzzeitige, lokal begrenzte Ausbildung einer hohen Reaktionstemperatur durch exotherme Reaktion der beiden miteinander abwechselnden Hauptkomponenten möglich.

Allgemein und unabhängig von der genauen Materialzusammensetzung kann die reaktive Multischichtfolie eine Gesamtdicke im Bereich zwischen 10 µm und 300 µm, insbesondere zwischen 20 µm und 200 µm, aufweisen. Eine derart gewählte Foliendicke ist besonders geeignet, um eine für das Aufschmelzen der Materialien ausreichende Energiemenge bereitzustellen. Andererseits ist die freigesetzte Energiemenge mit solchen Folien aber genügend begrenzt, dass die übrigen Bereiche der zu verbindenden Elemente nicht mit auf die hohe Reaktionstemperatur erhitzt werden.

Allgemein und unabhängig von der genauen Materialzusammensetzung kann es sich bei der reaktiven Multischichtfolie um eine nanostrukturierte Multischichtfolie handeln. Mit anderen Worten kann die Dicke der einzelnen Teilschichten des Schichtsystems jeweils unterhalb von 1 µm liegen. Insbesondere kann die Schichtdicke der einzelnen Teilschichten jeweils in einem Bereich zwischen 10 nm und 200 nm liegen. Dabei können die Schichtdicken der einzelnen Teilschichten insbesondere auch unterschiedlich gewählt sein, wobei die gewählte Schichtdicke besonders bevorzugt abhängig vom Material der jeweiligen Teilschicht gewählt sein kann.

Allgemein vorteilhaft kann der supraleitende Bandleiter eine supraleitende Schicht und insbesondere eine hochtemperatursupraleitende Schicht aufweisen. Die supraleitende Schicht kann insbesondere im Verhältnis zur Gesamtdicke des Bandleiters vergleichsweise dünn ausgebildet sein. Hochtemperatursupraleiter (HTS) sind supraleitende Materialien mit einer Sprungtemperatur oberhalb von 25 K und bei einigen Materialklassen oberhalb von 77 K, bei denen die Betriebstemperatur durch Kühlung mit anderen kryogenen Materialien als flüssigem Helium erreicht werden kann. HTS-Materialien sind besonders attraktiv, da diese Materialien abhängig von der Wahl der Betriebstemperatur hohe obere kritische Magnetfelder sowie hohe kritische Stromdichten aufweisen können. Der Hochtemperatursupraleiter kann beispielsweise Magnesiumdiborid oder einen oxidkeramischen Supraleiter, beispielsweise eine Verbindung des Typs REBa₂Cu₃Oₓ (kurz REBCO) aufweisen, wobei RE für ein Element der seltenen Erden oder eine Mischung solcher Elemente steht. Die genannten HTS-Materialien können leicht durch eine zu starke Erhitzung thermisch geschädigt werden, was typischerweise zu einem Verlust der supraleitenden Eigenschaften führt. Daher kommen die Vorteile der Erfindung im Zusammenhang mit diesen HTS-Materialien besonders zum Tragen.

In dem auf die beschriebene Weise gebildeten Kontakt kann vorteilhaft ein auf die Kontaktfläche bezogener Kontaktwiderstand unterhalb von 500 nOhm·cm² erreicht werden. Besonders bevorzugt liegt dieser Kontaktwiderstand im Bereich unterhalb von 100 nOhm·cm² und insbesondere zwischen 10 nOhm·cm² und 50 nOhm·cm². Derart niedrige Kontaktwiderstände konnten bereits mittels kommerziell verfügbarer Multischichtfolien realisiert werden. Bei ausreichend großen Kontaktflächen können hiermit ausreichend niedrige absolute Kontaktwiderstände erreicht werden, um beispielsweise Anwendungen von derart gebildeten Leiterverbunden in supraleitenden elektrischen Spuleneinrichtungen zu ermöglichen. Dazu kann die Kontaktfläche beispielsweise in einem Bereich zwischen 1 cm² und 10 cm² liegen. Beispielsweise kann sich die Kontaktfläche über einen wesentlichen Teil der Breite des supraleitenden Bandleiters (typischerweise zwischen 4 mm und 20 mm) und in Längsrichtung des Bandleiters über einige Zentimeter.

Allgemein vorteilhaft kann das Verfahren flussmittelfrei und insbesondere ohne ein organisches Flussmittel durchgeführt werden. Im Gegensatz zu herkömmlichen Lötverfahren ist die Verwendung eines solchen Flussmittels aufgrund der besonders hohen lokalen Prozesstemperatur nicht nötig. Ein wesentlicher Vorteil dieser Ausführungsform ist, dass die gebildete Verbindungschicht frei von den Rückständen des Flussmittels und auch frei von Lunkern sein kann. Hierdurch kann der Kontaktwiderstand im Vergleich zu einem Lötprozess mit einem solchen Flussmittel vorteilhaft verringert werden.

Gemäß einer vorteilhaften Ausführungsform des elektrischen Leiterverbundes ist die dauerhafte elektrische Verbindung durch eine Lötverbindung mittels einer Verbindungsschicht ausgebildet. Diese Verbindungschicht weist in einer besonders bevorzugten Ausführungsform eine intermetallische Verbindung mit den Bestandteilen Aluminium und Nickel auf. Optional können hier zusätzliche metallische Bestandteile vorliegen, wie beispielsweise Kupfer, Zinn und/oder weitere Bestandteile eines niedrigschmelzenden zinnhaltigen Lots.

Im Übrigen kommen auch für die bevorzugten Ausführungsformen des elektrischen Leiterverbundes die weiter oben beschriebenen Ausführungsvarianten des Verfahrens zum Tragen. So kann insbesondere der Leiterverbund ein Leiterverbund zwischen zwei supraleitenden Bandleitern sein. Alternativ kann der Leiterverbund ein Leiterverbund zwischen einem supraleitenden Bandleiter und einem normalleitenden Kontaktstück sein.

Nachfolgend wird die Erfindung anhand einiger bevorzugter Ausführungsbeispiele unter Bezugnahme auf die angehängten Zeichnungen beschrieben, in denen:
- Figur 1: eine schematische Querschnittsdarstellung eines supraleitenden Bandleiters zeigt, der mit dem erfindungsgemäßen Verfahren kontaktiert werden soll,
- Figur 2: einen schematischen Längsschnitt zweier supraleitender Bandleiter zeigt, die nach dem erfindungsgemäßen Verfahren miteinander kontaktiert worden sind,
- Figur 3: einen schematischen Längsschnitt eines Bandleiters zeigt, der nach dem erfindungsgemäßen Verfahren mit einem Kontaktstück kontaktiert worden ist und
- Figur 4: eine schematische Darstellung eines Kontaktierungsverfahrens während der Zündung zeigt.

In den Figuren sind gleiche oder gleich wirkende Elemente mit gleichen Bezugszeichen versehen.

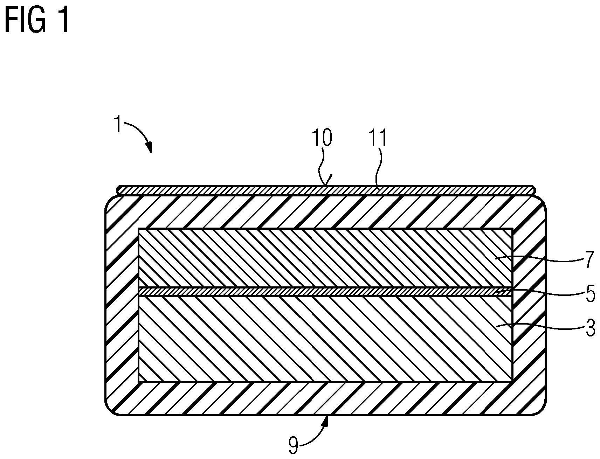

Figur 1 zeigt eine schematische Querschnittsansicht eines Bandleiters 1, wie er beispielsweise in dem erfindungsgemäßen Kontaktierungsverfahren zum Einsatz kommen kann. Der Bandleiter 1 umfasst ein bandförmiges metallisches Substrat 3. Auf einer der beiden Hauptflächen dieses Substrats 3 ist über einem Stapel von hier nicht gezeigten Pufferschichten eine flächige supraleitende Schicht 5 abgeschieden. Diese supraleitende Schicht 5 ist wiederum mit einer metallischen Deckschicht 7 abgedeckt. Diese Deckschicht 7 kann beispielsweise aus Kupfer oder Silber oder
einem Stapel beider Materialien bestehen. Das Substrat, die supraleitende Schicht 5 und die Deckschicht 7 sowie die nicht dargestellten Pufferschichten sind zusammen von einer außenliegenden normalleitenden Stabilisierungsschicht 9 umhüllt. Diese Stabilisierungsschicht 9 ist beispielsweise aus Kupfer ausgebildet. Optional kann auf einer Kontaktfläche 10 des Bandleiters 1 zusätzlich eine Lotschicht 11 aus einem vergleichsweise niedrigschmelzenden Lotmaterial gebildet sein. Dies kann für die Ausbildung eines vergleichsweise niederohmigen elektrischen Kontakts mit den weiter unten beschriebenen Kontaktierungsverfahren förderlich sein, ist jedoch nicht unbedingt notwendig.

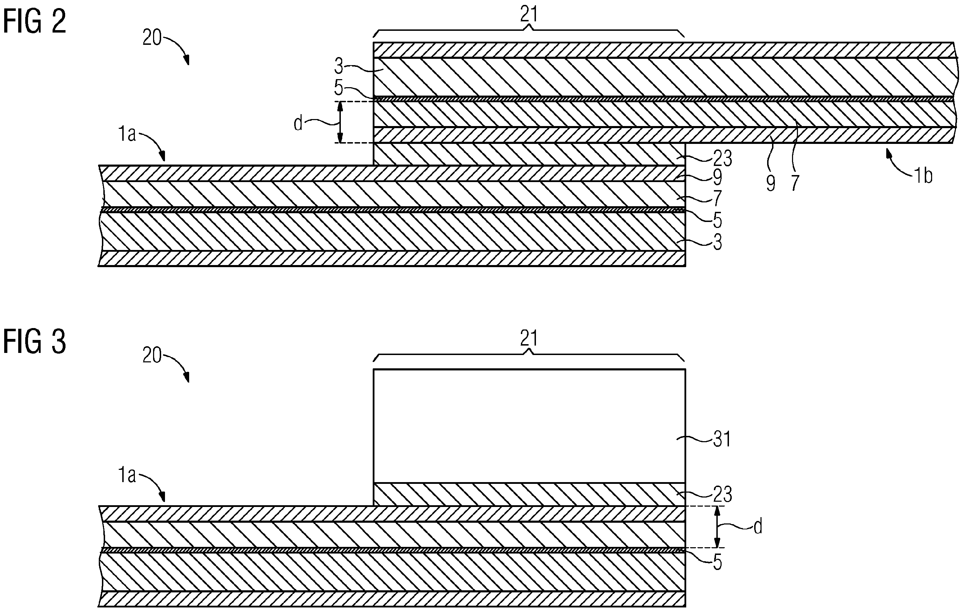

Figur 2 zeigt einen schematischen Längsschnitt durch einen elektrischen Leiterverbund 20 nach einem ersten Ausführungsbeispiel der Erfindung. Der Leiterverbund 20 weist einen ersten supraleitenden Bandleiter 1a und einen zweiten supraleitenden Bandleiter 1b auf, welche nach einer Ausführungsform des erfindungsgemäßen Verfahrens miteinander kontaktiert worden sind. Die beiden Bandleiter 1a und 1b können dabei beispielsweise jeweils ähnlich wie beim Beispiel der Figur 1 ausgeführt sein. In jedem Fall weisen sie eine innenliegende supraleitende Schicht 5 und eine außenliegende normalleitende Schicht (hier die umhüllende Stabilisierungsschicht 9) auf.

Die beiden Bandleiter 1a und 1b sind in einem Kontaktbereich 21 durch eine dauerhafte elektrisch leitende Verbindung miteinander verbunden. Diese Verbindung ist durch eine Verbindungsschicht 23 aus einem elektrisch leitenden Material ausgebildet. Diese Verbindungsschicht 23 wurde durch Zünden einer zwischen den beiden Bandleitern 1a und 1b eingelegten reaktiven Multischichtfolie ausgebildet. Während des Zündens sind dabei die beiden zu kontaktierenden Bandleiter 1a und 1b aneinandergepresst worden. Beim Zünden der reaktiven Multischichtfolie wurde eine exotherme chemische Reaktion innerhalb der Folie ausgelöst, wobei die in den Teilschichten der Folie vorliegenden Materialien miteinander reagiert haben. Die Reaktionstemperatur lag dabei deutlich oberhalb von 1000°C. Die hierbei erhitzte Zone war jedoch auf die zwischen die beiden Bandleiter gelegte Multischichtfolie und die unmittelbar daran angrenzenden Oberflächen der beiden Bandleiter beschränkt. Es wurde dabei also nur die jeweils dem anderen Bandleiter zugewandte Oberfläche der Stabilisierungsschicht 9 erhitzt, und die übrigen Schichten 3, 5 und 7 des Bandleiters sowie die abgewandte Seite der Stabilisierungsschicht 9 blieben dabei auf einer Temperatur nahe der Raumtemperatur. Während dieser exothermen Reaktion wurde also die Verbindungsschicht 23 gebildet. Dabei lag das Material der Verbindungschicht zunächst in einem geschmolzenen Zustand vor und ist dann während der nachfolgenden Abkühlung zu einer festen Verbindungsschicht 23 erstarrt.

Die Verbindungschicht 23 umfasst also zumindest die Materialien der ursprünglichen Multischichtfolie. Zusätzlich kann sie optional auch das Material der direkt an die Verbindungschicht 23 angrenzenden Schichten 9 umfassen. Im gezeigten Beispiel der Figur 2 sind diese angrenzenden Schichten 9 als Stabilisierungsschichten aus Kupfer gebildet. Neben den Materialien der Multischichtfolie weist die Verbindungschicht 23 hier also zusätzlich noch Kupfer auf, da das Kupfer aus diesen angrenzenden Schichten während der heißen exothermen Reaktion oberflächlich eingeschmolzen wurde. Dabei kann die gebildete Verbindungschicht insbesondere als intermetallische Verbindung aus den genannten Materialien vorliegen. In jedem Fall ist sie elektrisch leitfähig, sodass über die Verbindungschicht 23 ein dauerhafter flächiger elektrischer Kontakt zwischen den beiden Bandleitern 1a und 1b vermittelt wird.

Alternativ oder zusätzlich zu der Einlagerung des Materials der Stabilisierungsschicht 9 kann die Verbindungschicht 23 aber auch das Material einer hier nicht dargestellten, aber optional auf die Kontaktflächen der jeweiligen Bandleiter aufgebrachten Lotschicht umfassen, wie sie als optionale Schicht in der Figur 1 dargestellt war. Bei den Materialien dieser Lotschichten kann es sich insbesondere um vergleichsweise niedrigschmelzende, beispielsweise zinnhaltige, Lotmaterialien handeln.

Obwohl die Reaktionstemperatur im Bereich der zwischen den Bandleitern eingelegten Multischichtfolie während der Ausbildung der Verbindungschicht 23 sehr hoch ist, bleibt die weiter innen liegende supraleitende Schicht 5 auch während der Reaktion von dieser starken Erwärmung verschont. Hierdurch wird eine thermische Schädigung der supraleitenden Schicht 5 vorteilhaft vermieden. Dies kann auch bei einem vergleichsweise geringen Abstand d zwischen der supraleitenden Schicht 5 und der zwischengelegten Multischichtfolie realisiert werden. Da in Figur 2 nicht die Multischichtfolie selbst, sondern erst der Zustand nach Bildung der Verbindungschicht dargestellt ist, ist hier stellvertretend für den oben definierten Abstand d der Abstand zwischen der supraleitenden Schicht 5 und der Verbindungschicht 23 dargestellt. Diese beiden Abstände sind aber in etwa gleich, wenn die Verbindungschicht 23 hier mehrheitlich aus dem Material der ursprünglichen Multischichtfolie gebildet wird.

Figur 3 zeigt einen schematischen Längsschnitt durch einen elektrischen Leiterverbund 20 nach einem zweiten Ausführungsbeispiel der Erfindung. Gezeigt ist wiederum ein erster Bandleiter 1a, welche hier aber nicht mit einem weiteren Bandleiter, sondern mit einem normalleitenden Kontaktstück 31 kontaktiert wurde. Das normalleitende Kontaktstück 31 ist hier als massiver Kupferblock ausgestaltet. Die elektrische Kontaktierung des ersten Bandleiters 1a mit diesem Kontaktstück wurde auf ähnliche Weise durchgeführt, wie im Zusammenhang mit dem Beispiel der Figur 2 beschrieben. So wurde auch hier durch eine stark exotherme Reaktion in einer zwischen den zu kontaktierenden Elementen eingelegten reaktiven Multischichtfolie die für die Ausbildung der elektrischen Verbindung notwendige Prozesswärme erzeugt. Aufgrund dieser Prozesswärme wurde eine elektrische Verbindungschicht 23 in zunächst flüssiger Form erzeugt, welche anschließend beim Abkühlen erstarrt ist. Auch hier weist die gebildete Verbindungschicht 23 in jedem Fall die Edukt-Materialien der Multischichtfolie und optional zusätzlich Kupfer aus den angrenzenden Oberflächen der benachbarten Elemente 1a und 31 auf. Weiterhin optional weist sie zusätzlich ein niedrigschmelzendes Lotmaterial aus hier nicht dargestellten, aber optional auf den zu kontaktierenden Oberflächen aufgebrachten Lotschichten auf.

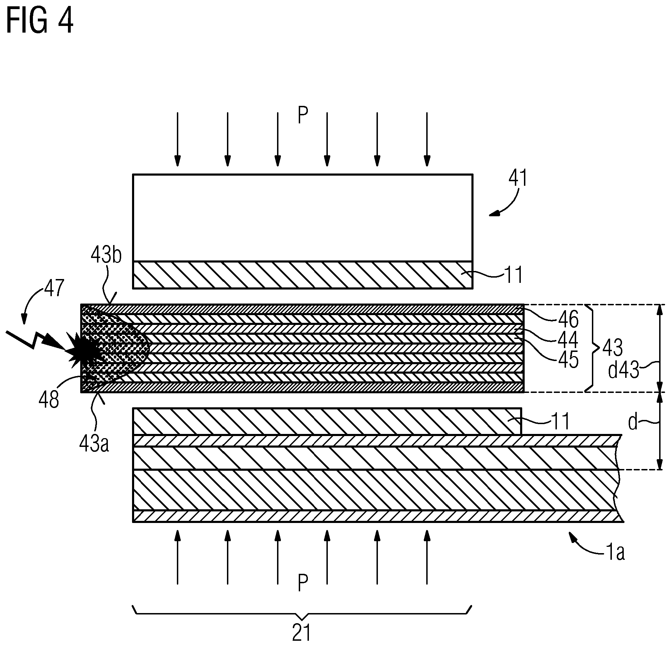

In Figur 4 ist eine schematische Darstellung eines Ausführungsbeispiels des erfindungsgemäßen Kontaktierungsverfahrens während der Zündung der exothermen Reaktion gezeigt. Gezeigt ist eine reaktive Multischichtfolie 43, welche zwischen den beiden zu verbindenden Elementen eingelegt ist. Bei diesen beiden Elementen handelt es sich um einen ersten supraleitenden Bandleiter 1a und um ein weiteres Leiterelement 41. Bei dem weiteren Leiterelement 41 kann es sich beispielsweise wie in Figur 2 um einen zweiten supraleitenden Bandleiter oder auch wie in Figur 3 um ein normalleitendes Kontaktstück handeln. Dabei ist die erste Hauptfläche 43a der Folie in flächigem Kontakt mit dem supraleitenden Bandleiter 1b und die gegenüberliegende zweite Hauptfläche 43b ist in flächigem Kontakt mit dem weiteren Leiterelement 41. Zur Herstellung der dauerhaften elektrisch leitfähigen Verbindung zwischen den beiden zu kontaktierenden Elementen 1a und 41 werden diese zusammen mit der dazwischen gelegten Folie 43 mit einem Anpressdruck p zusammengepresst. Hierbei werden selbstverständlich die in Figur 4 nur der Übersichtlichkeit halber dargestellten Lücken zwischen den einzelnen Elementen geschlossen.

Die reaktive Multischichtfolie 43 aus dem Beispiel der Figur 4 weist ein Schichtsystem mit einer wechselnden Abfolge von ersten Teilschichten 44 und zweiten Teilschichten 45 auf. Beispielhaft sind in Figur 4 nur drei erste Teilschichten 44 und vier zweite Teilschichten 45 dargestellt. Diese sollen jedoch jeweils stellvertretend für eine wesentlich höhere Anzahl solcher Teilschichten stehen. Insbesondere handelt es sich um eine nanostrukturierte Folie, bei der also die Schichtdicke der einzelnen Teilschichten 44 und 45 unterhalb von 1 µm liegt. Dabei sind die ersten Teilschichten 44 aus einem ersten Edukt-Material gebildet und die zweiten Teilschichten 45 sind aus einem zweiten Edukt-Material gebildet. Diese beiden Edukt-Materialien können bei geeigneter Zündung in einer stark exothermen Reaktion miteinander reagieren. Beispielsweise kann es sich bei dem ersten Edukt-Material um Nickel und bei dem zweiten Edukt-Material um Aluminium handeln. Bei der exothermen chemischen Reaktion dieser beiden Materialien wird elektrisch leitfähiges Nickelaluminid gebildet und gleichzeitig thermische Energie freigesetzt.

Die Zündung der exothermen chemischen Reaktion in der Folie 43 wird durch einen in der Figur 4 schematisch dargestellten Zündpuls 47 ausgelöst. Dabei kann es sich beispielsweise um einen elektrischen, optischen und/oder thermischen Puls handeln. In dem Teilbereich der Folie, in dem der Zündpuls 47 einwirkt, wird die Aktivierungsenergie der exothermen Reaktion überschritten und die beiden Edukt-Materialien der unterschiedlichen Teilschichten können miteinander reagieren. Durch die hierbei freigesetzte Reaktionswärme pflanzt sich der Reaktionsbereich 48 der exothermen Reaktion lateral durch die Folie hindurch fort. Dies geschieht mit einer vergleichsweise hohen Geschwindigkeit, wobei an einem gegebenen Ort der Folie die hohe Reaktionstemperatur nur für sehr kurze Zeit vorliegt. Die Gesamtdicke der Folie 43 ist in Figur 4 mit dem Bezugszeichen d43 gekennzeichnet. Sie kann beispielsweise einige 10 µm betragen.

Beim Beispiel der Figur 4 weisen die beiden zu verbindenden Elemente 1a und 41 zumindest im Bereich des auszubildenden Kontakts zusätzliche Lotschichten 11 auf. Auch die Multischichtfolie weist auf ihren beiden außenliegenden Oberflächen ähnliche Lotschichten 46 auf. Diese Lotschichten bestehen vorzugsweise aus einem niedrigschmelzenden Lotmaterial und können zur Ausbildung eines vergleichsweise niederohmigen elektrischen Kontakts beitragen. Sie sind jedoch allgemein jeweils optional. Für die Ausbildung einer dauerhaften flächigen elektrischen Kontaktierung ist es ausreichend, wenn eine elektrisch leitfähige Verbindungschicht 23 aus den Materialien der Folie sowie optional zusätzlich aus dem Material der angrenzenden Oberflächen der zu verbindenden Elemente gebildet wird.

### Bezugszeichenliste

- 1: supraleitender Bandleiter
- 1a: erster supraleitender Bandleiter
- 1b: zweiter supraleitender Bandleiter
- 3: Substrat
- 5: supraleitende Schicht
- 7: normalleitende Deckschicht
- 9: normalleitende Stabilisierungsschicht
- 10: Kontaktfläche
- 11: Lotschicht
- 20: elektrischer Leiterverbund
- 21: Kontaktbereich
- 23: Verbindungsschicht
- 31: Kontaktstück
- 41: weiteres Leiterelement
- 43: reaktive Multischichtfolie
- 43a: erste Hauptfläche
- 43b: zweite Hauptfläche
- 44: erste Teilschicht
- 45: zweite Teilschicht
- 46: Lotschicht
- 47: Zündpuls
- 48: Reaktionsbereich
- d: Abstand
- d43: Dicke der Multischichtfolie
- p: Anpressdruck

## Patentansprüche

1. Verfahren zur Ausbildung einer elektrischen Kontaktierung zwischen einem ersten supraleitenden Bandleiter (1a) und einem weiteren elektrischen Leiterelement (41),
- wobei der erste supraleitende Bandleiter (1a) in einem Kontaktbereich (21) des Bandleiters (1) in flächigen Kontakt mit einer ersten Hauptfläche (43a) einer reaktiven Multischichtfolie (43) gebracht wird,
- wobei die von der ersten Hauptfläche (43a) abgewandte zweite Hauptfläche (43b) der reaktiven Multischichtfolie (43) in flächigen Kontakt mit dem weiteren elektrischen Leiterelement (41) gebracht wird,
- wobei durch ein anschließendes Zünden einer exothermen chemischen Reaktion in der Multischichtfolie (43) und durch Gegeneinanderpressen des ersten supraleitenden Bandleiters (1a) und des weiteren elektrischen Leiterelements (41) mit einem Anpressdruck (P) während der Zündung aus den Materialien der Multischichtfolie (43) eine elektrisch leitfähige Verbindungschicht (23) sowie eine dauerhafte elektrisch leitende Verbindung zwischen dem ersten supraleitenden Bandleiter (1a) und dem weiteren elektrischen Leiterelement (41) gebildet werden.

2. Verfahren nach Anspruch 1, bei welchem die gebildete dauerhaft elektrisch leitende Verbindung eine Lötverbindung zwischen dem ersten supraleitenden Bandleiter (1a) und dem weiteren elektrischen Leiterelement (41) ist.

3. Verfahren nach Anspruch 2, bei welchem die Lötverbindung durch eine Verbindungsschicht (23) ausgebildet wird, welche mehrheitlich aus den Materialien der reaktiven Multischichtfolie (43) gebildet ist.

4. Verfahren nach Anspruch 2 oder 3, bei welchem die Lötverbindung durch eine Verbindungsschicht (23) ausgebildet wird, welche die Materialien der reaktiven Multischichtfolie (23) und zusätzlich das Material von wenigstens einer weiteren Lotschicht (11,46) aufweist.

5. Verfahren nach Anspruch 4, bei welchem die weitere Lotschicht (11) vor der Zündung der exothermen chemischen Reaktion als Beschichtung im Kontaktbereich (21) des ersten supraleitenden Bandleiters (1a) und/oder als Beschichtung des weiteren elektrischen Leiterelements (41) vorliegt.

6. Verfahren nach einem der vorhergehenden Ansprüche, bei welchem der erste supraleitende Bandleiter (1a) und das weitere elektrische Leiterelement (41) während der Zündung der exothermen chemischen Reaktion gegeneinandergepresst werden.

7. Verfahren nach einem der vorhergehenden Ansprüche, bei welchem das weitere elektrische Leiterelement (41) ein zweiter supraleitender Bandleiter (1b) ist.

8. Verfahren nach einem der Ansprüche 1 bis 6, bei welchem das weitere elektrische Leiterelement (41) ein normalleitendes Kontaktstück (31) ist.

9. Verfahren nach einem der vorhergehenden Ansprüche, bei welchem die Zündung der exothermen chemischen Reaktion durch einen elektrischen Zündpuls (47), durch einen optischen Zündpuls (47) und/oder einen thermischen Zündpuls (47) ausgelöst wird.

10. Verfahren nach einem der vorhergehenden Ansprüche, bei welchem durch die Zündung der exothermen chemischen Reaktion eine Reaktionstemperatur ausgebildet wird, die im Bereich zwischen 1000 °C und 2000 °C liegt.

11. Verfahren nach einem der vorhergehenden Ansprüche, bei welchem das Material der reaktiven Multischichtfolie (43) Aluminium und/oder Nickel umfasst.

12. Verfahren nach einem der vorhergehenden Ansprüche, bei welchem die reaktive Multischichtfolie (43) eine Gesamtdicke (d43) im Bereich zwischen 10 µm und 300 µm, insbesondere zwischen 20 µm und 200 µm, aufweist.

13. Verfahren nach einem der vorhergehenden Ansprüche, bei welchem die reaktive Multischichtfolie (43) ein nanostrukturiertes Multischichtsystem aufweist.

14. Elektrischer Leiterverbund (20), welcher einen ersten supraleitenden Bandleiter (1a) und ein weiteres elektrisches Leiterelement (41) aufweist,
wobei in einem Kontaktbereich (21) zwischen dem ersten supraleitenden Bandleiter (1a) und dem weiteren elektrischen Leiterelement (41) eine dauerhafte elektrisch leitende Verbindung hergestellt ist, welche durch Zünden einer exothermen chemischen Reaktion in einer Multischichtfolie (43) zwischen dem ersten supraleitenden Element (1a) und dem weiteren elektrischen Leiterelement (41) und durch Gegeneinanderpressen des ersten supraleitenden Bandleiters (1a) und des weiteren elektrischen Leiterelements (41) mit einem Anpressdruck (P) während der Zündung ausgebildet ist und bei der eine elektrisch leitfähige Verbindungschicht (23) aus den Materialien der Multischichtfolie (43) gebildet ist.

15. Elektrischer Leiterverbund (20) nach Anspruch 14, bei welchem die dauerhafte elektrische Verbindung durch eine Lötverbindung mittels der Verbindungsschicht (23) ausgebildet ist, wobei die Verbindungsschicht (23) eine intermetallische Verbindung mit den Bestandteilen Aluminium und Nickel aufweist.

## Claims

1. Method for forming an electrical contacting between a first superconducting strip conductor (1a) and a further electrical conductor element (41),
- wherein the first superconducting strip conductor (1a), in a contact region (21) of the strip conductor (1), is brought into areal contact with a first main surface (43a) of a reactive multilayer film (43),
- wherein the second main surface (43b) of the reactive multilayer film (43), facing away from the first main surface (43a), is brought into areal contact with the further electrical conductor element (41),
- wherein an electrically conductive connection layer (23) and a permanent electrically conductive connection between the first superconducting strip conductor (1a) and the further electrical conductor element (41) is formed from the materials of the multilayer film (43) by subsequently triggering an exothermic chemical reaction in the multilayer film (43) and by pressing the first superconducting strip conductor (1a) and the further electrical conductor element (41) against one another with a pressing pressure (P) during the triggering.

2. Method according to Claim 1, in which the permanent electrically conductive connection formed is a soldered connection between the first superconducting strip conductor (1a) and the further electrical conductor element (41).

3. Method according to Claim 2, in which the soldered connection is formed by a connection layer (23), the majority of which is formed from the materials of the reactive multilayer film (43).

4. Method according to Claim 2 or 3, in which the soldered connection is formed by a connection layer (23) comprising the materials of the reactive multilayer film (23) and additionally the material of at least one further solder layer (11, 46).

5. Method according to Claim 4, in which, before the exothermic chemical reaction is triggered, the further solder layer (11) is present as a coating in the contact region (21) of the first superconducting strip conductor (1a) and/or as a coating of the further electrical conductor element (41).

6. Method according to one of the preceding claims, in which the first superconducting strip conductor (1a) and the further electrical conductor element (41) are pressed against one another during the triggering of the exothermic chemical reaction.

7. Method according to one of the preceding claims, in which the further electrical conductor element (41) is a second superconducting strip conductor (1b).

8. Method according to one of Claims 1 to 6, in which the further electrical conductor element (41) is a normally conducting contact piece (31).

9. Method according to one of the preceding claims, in which the triggering of the exothermic chemical reaction is initiated by an electrical triggering pulse (47), by an optical triggering pulse (47) and/or a thermal triggering pulse (47).

10. Method according to one of the preceding claims, in which a reaction temperature that is in the range of between 1000°C and 2000°C is formed by the triggering of the exothermic chemical reaction.

11. Method according to one of the preceding claims, in which the material of the reactive multilayer film (43) comprises aluminium and/or nickel.

12. Method according to one of the preceding claims, in which the reactive multilayer film (43) has a total thickness (d43) in the range of between 10 um and 300 um, in particular between 20 um and 200 µm.

13. Method according to one of the preceding claims, in which the reactive multilayer film (43) comprises a nanostructured multilayer system.

14. Electrical conductor composite assembly (20) comprising a first superconducting strip conductor (1a) and a further electrical conductor element (41),
wherein a permanent electrically conductive connection is produced in a contact region (21) between the first superconducting strip conductor (1a) and the further electrical conductor element (41), said connection being formed by triggering an exothermic chemical reaction in a multilayer film (43) between the first superconducting element (1a) and the further electrical conductor element (41) and by pressing the first superconducting strip conductor (1a) and the further electrical conductor element (41) together with a pressing pressure (P) during the triggering and in said connection an electrically conductive connection layer (23) being formed from the materials of the multilayer film (43).

15. Electrical conductor composite assembly (20) according to Claim 14, in which the permanent electrical connection is formed by a soldered connection by means of a connection layer (23), wherein the connection layer (23) comprises an intermetallic compound having the constituents aluminium and nickel.

## Revendications

1. Procédé de formation d'une mise en contact électrique entre un premier conducteur (1a) plat supraconducteur et un autre élément (41) conducteur de l'électricité,
- dans lequel on met le premier conducteur (1a) plat supraconducteur dans une partie (21) de contact du conducteur (1) plat en contact de surface avec une première surface (43a) principale d'une feuille (43) réactive stratifiée,
- dans lequel on met la deuxième surface (43b) principale, éloignée de la première surface (43a) principale, de la feuille (43) réactive stratifiée en contact de surface avec l'autre élément (41) conducteur de l'électricité,
- dans lequel, par un amorçage venant ensuite d'une réaction chimique exothermique dans la feuille (43) stratifiée et en pressant l'un contre l'autre le premier conducteur (1a) plat supraconducteur et l'autre élément (41) conducteur de l'électricité avec une pression (P) d'application pendant l'amorçage, on forme, à partir des matériaux de la feuille (43) stratifiée, une couche (23) de liaison conductrice de l'électricité ainsi qu'une liaison permanente conductrice de l'électricité entre le premier conducteur (1a) plat supraconducteur et l'autre élément (41) conducteur de l'électricité.

2. Procédé suivant la revendication 1, dans lequel la liaison permanente formée conductrice de l'électricité est une brasure entre le premier conducteur (1a) plat supraconducteur et l'autre élément (41) conducteur de l'électricité.

3. Procédé suivant la revendication 2, dans lequel on forme la brasure par une couche (23) de liaison, que l'on forme à partir de la pluralité des matériaux de la feuille (43) réactive stratifiée.

4. Procédé suivant la revendication 2 ou 3, dans lequel on forme la brasure par une couche (23) de liaison, qui a les matériaux de la feuille (23) réactive stratifiée et en outre le matériau d'au moins une autre couche (11, 46) de brasure.

5. Procédé suivant la revendication 4, dans lequel l'autre couche (11) de brasure est présente avant l'amorçage de la réaction chimique exothermique sous la forme d'un revêtement dans la partie (21) de contact du premier conducteur (1a) plat supraconducteur et/ou sous la forme d'un revêtement de l'autre élément (41) conducteur de l'électricité.

6. Procédé suivant l'une des revendications précédentes, dans lequel on presse l'un contre l'autre le premier conducteur (1a) plat supraconducteur et l'autre élément (41) conducteur de l'électricité pendant l'amorçage de la réaction chimique exothermique.

7. Procédé suivant l'une des revendications précédentes, dans lequel l'autre élément (41) conducteur de l'électricité est un deuxième conducteur (1b) plat supraconducteur.

8. Procédé suivant l'une des revendications 1 à 6, dans lequel l'autre élément (41) conducteur de l'électricité est une pièce (31) de contact de conduction normale.

9. Procédé suivant l'une des revendications précédentes, dans lequel on déclenche l'amorçage de la réaction chimique exothermique par une impulsion (47) électrique d'amorçage, par une impulsion (47) optique d'amorçage et/ou par une impulsion (47) thermique d'amorçage.

10. Procédé suivant l'une des revendications précédentes, dans lequel on obtient, par l'amorçage de la réaction chimique exothermique, une température de réaction, qui est dans la plage comprise entre 1000°C et 2000°C.

11. Procédé suivant l'une des revendications précédentes, dans lequel le matériau de la feuille (43) réactive stratifiée comprend de l'aluminium et/ou du nickel.

12. Procédé suivant l'une des revendications précédentes, dans lequel la feuille (43) réactive stratifiée a une épaisseur (d43) totale dans la plage comprise entre 10 um et 300 um, en particulier entre 20 um et 200 um.

13. Procédé suivant l'une des revendications précédentes, dans lequel la feuille (43) réactive stratifiée comporte un système stratifié nanostructuré.

14. Composite (20) conducteur de l'électricité, qui a un premier conducteur (1a) plat supraconducteur et un autre élément (41) conducteur de l'électricité,
dans lequel il est ménagé, dans une partie (21) de contact entre le premier conducteur (1a) plat supraconducteur et l'autre élément (41) conducteur de l'électricité, une liaison permanente conductrice de l'électricité, qui est formée par amorçage d'une réaction chimique exothermique dans une feuille (43) stratifiée entre le premier élément (1a) supraconducteur et l'autre élément (41) conducteur de l'électricité et en pressant l'un contre l'autre le premier conducteur (1a) plat supraconducteur et l'autre élément (41) conducteur de l'électricité avec une pression (P) d'application pendant l'amorçage, et dans lequel il est formé une couche (23) de liaison conductrice de l'électricité à partir des matériaux de la feuille (43) stratifiée.

15. Composite (20) conducteur de l'électricité suivant la revendication 14, dans lequel la liaison électrique permanente est formée par une brasure au moyen de la couche (23) de liaison, dans lequel la couche (23) de liaison a un composé intermétallique ayant les constituants aluminium et nickel.
